# EUROPEAN PATENT APPLICATION

(11) **EP 2 635 073 A1**
(43) Date of publication of application: **04.09.2013**
(21) Application number: 13154475.1
(22) Date of filing: 07.02.2013
(51) Int. Cl.: H04W 48/20, H04W 84/12

(54) **Access point selection based on number of successful connections**

(30) Priority: 29.02.2012 TW 101106476
(71) Applicant: Acer Incorporated, Taipei Hsien 221 (TW)
(72) Inventor: Jiang, Shu-Yu, 221 Hsichih, Taipei Hsien (TW); Lin, Yung-Sen, Hsichih, Taipei Hsien 221 (TW); Chuang, Tzu-Lung, Hsichih, Taipei Hsien 221 (TW)
(74) Representative: 2K Patentanwälte Blasberg Kewitz & Reichel

(57) **Abstract**

Management methods for use in an electronic device are provided. The electronic device includes a network connection unit for connecting to a network through a first access point (AP). First, a preferred AP list is provided, wherein the preferred AP list records a plurality of APs and connection records corresponding thereto. Then, the first AP is sequentially selected from the plurality of APs of the preferred AP list to connect to the network, wherein each of the plurality of APs is sequentially selected as the first AP based on the corresponding number of successful connections to the selected AP.

## Description

### CROSS REFERENCE TO RELATED APPLICATIONS

This Application claims priority of Taiwan Application No. 101106476, filed on Feb. 29, 2012, and the entirety of which is incorporated by reference herein.

### BACKGROUND OF THE INVENTION

### Field of the Invention

The disclosure relates generally to electronic devices with a network connection unit and related management methods, and, more particularly to electronic devices and related management methods systems capable of automatically determining the connection priority of each AP that is available to be connected to and selecting an appropriate AP therefrom for network connection.

### Description of the Related Art

With vigorous development of network applications, the opportunity for the users to acquire information through the network becomes largely increased. Users may perform a lot of services and applications using electronic devices such as computer systems, portable devices and so on via the appropriate application over the network. Traditionally, when users need to use these network services, they must first connect directly to the network via the electronic device or connect to the Internet through a wired or wireless access point (AP). Generally, for applications that connect to the Internet via the AP, the users who are logged on to the operating system and ready to establish a network connection may request to connect with the previously connected AP in priority. If the previously connected AP cannot be connected successfully, the operating system will search for other available AP around the AP and determine whether or not the searched AP is in an AP list under its maintenance, and a connection link is established through this AP only when it is in its AP list. Current operating system uses the time sequence of the last connection and the concept of last-in-first-out to sort the connection priorities for all APs in the AP list based on time records of each AP in the AP list. In other words, the latest AP to join the AP list will have the highest priority and thus will be selected to connect first.

However, the user may waste much time in connection in certain places. For example, the user may connect to the Internet in the office during the daytime and establish a connection with an office AP and other APs in the office, thus the office AP and other APs in the office will then have a higher priority to the connection. When the user goes back to the home and connects to the home AP to connect to the Internet at night, as the last connection time for the home AP is longer than that of the office AP or other APs in the office, its connection priority is lower than the office AP and other APs in the office. Therefore, even if the user often goes online at home at night, much time may be wasted on successfully selecting the home AP to connect to the Internet or first manually disconnecting and then connecting to the home AP during a network connection establishment process.

Therefore, there is a need for a method of efficiently and automatically determining the connection priority of each AP that is available to be connected to and selecting an appropriate AP for network connection.

### BRIEF SUMMARY OF THE INVENTION

Electronic devices and management methods using the same are provided to automatically determine the access point for network connection.

In an embodiment, a management method for use in an electronic device is provided, wherein the electronic device includes a network connection unit for connecting to a network through a first access point (AP). The management method comprises the following steps. A preferred AP list is first provided, wherein the preferred AP list records a plurality of APs and connection records corresponding thereto. Next, the first AP is sequentially selected from the plurality of APs of the preferred AP list and the selected first AP is connected through the network connection unit to connect to the network, wherein each of the plurality of APs is sequentially selected as the first AP based on the corresponding connection record of the selected AP.

Another embodiment of an electronic device at least comprises a processing unit, a storage unit and a network connection unit. The network connection unit is used for establishing a connection with a first access point (AP) to connect to a network through the first AP. The storage unit stores a preferred AP list, wherein the preferred AP list records a plurality of APs and connection records corresponding thereto. The processing unit is coupled to the network connection unit and the storage unit. The processing unit is used for sequentially selecting the first AP from the plurality of APs of the preferred AP list and connecting to the selected first AP through the network connection unit to connect to the network, wherein the processing unit sequentially selects the first AP from the plurality of APs of the preferred AP list based on the corresponding connection record of the selected AP.

Management methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of an operating environment of the invention;

Fig. 2 is a flowchart of an embodiment of a management method of the invention;

Fig. 3 is a schematic diagram illustrating an embodiment of a preferred AP list of the invention;

Fig. 4 is a flowchart of another embodiment of a management method of the invention;

Fig. 5 is a flowchart of still another embodiment of a management method of the invention;

Figs. 6A and 6B are schematic diagrams illustrating embodiments of variations of the preferred AP list; and

Fig. 7 is a schematic diagram illustrating an embodiment of a preferred AP list after a new AP is added in it.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

Embodiments of the invention provide electronic devices and management methods, which can automatically adjust the connection priority of each AP that is available to be connected to according to a connection record of each AP so as to select an appropriate AP for network connection.

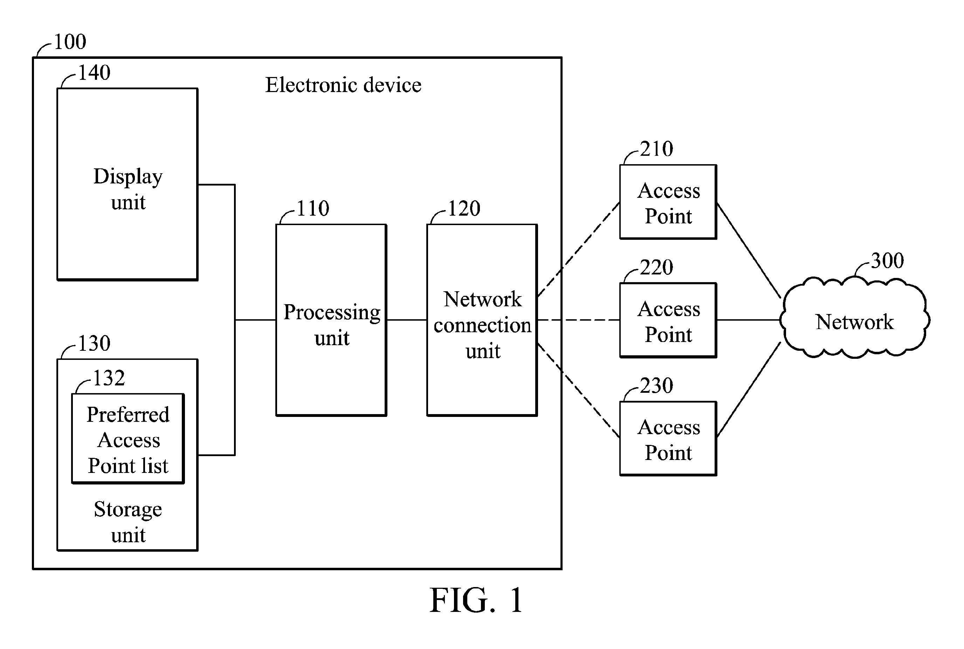

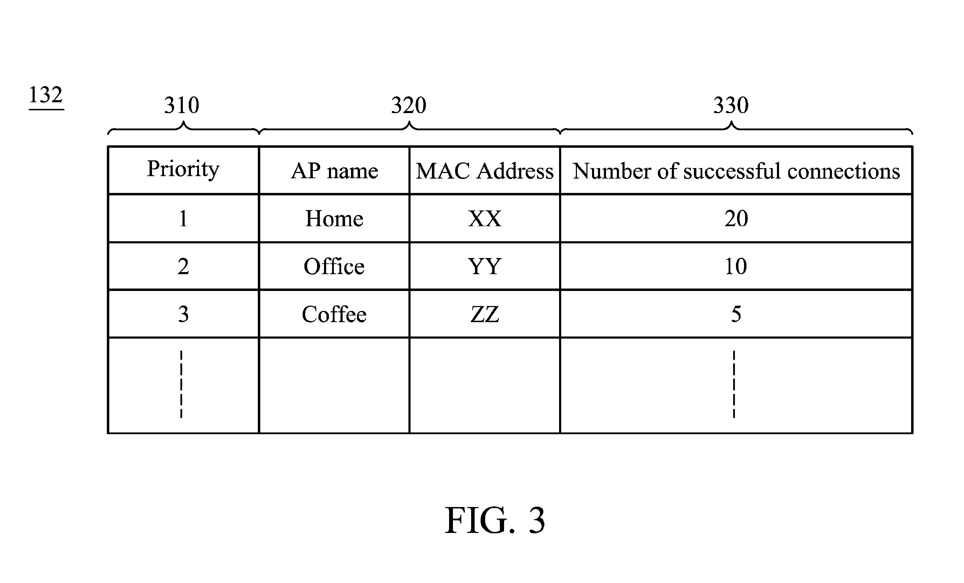

Fig. 1 is a schematic diagram illustrating an embodiment of an operating environment of the invention. As shown in Fig. 1, the operating environment 10 comprises an electronic device 100 of the invention, a plurality of wired or wireless APs 210, 220 and 230 and a network 300. The electronic device 100 may include, for example, computer systems, such as personal computers, handheld devices and portable devices, e.g. a laptop computer. However, it is to be understood that the invention is not limited thereto. The electronic device 100 may at least comprise a processing unit 110, a network connection unit 120, a storage unit 130 and a display unit 140. The network connection unit 120 may be any wired or wireless communication modules, such as blue-tooth communication modules, Wi-Fi, 3G communication modules or WLAN communication modules compliance with IEEE 802.1X standard, for connecting to responsive wired or wireless AP to connect to the network 300 via the connected AP such that the electronic device 100 may access resources on the connected network. The APs 210, 220 and 230 are connected to the network 300 and thus the network 300 may be connected through any of the APs 210, 220 and 230. The network 300 may comprise, for example, wired or wireless networks, such as Internet, Wi-Fi or 3G wireless networks, but the invention is not limited thereto. The electronic device 100 may establish a connection link with the AP 210, 220 or 230 through the network connection unit 120 to connect to the network 300 and access data from the network 300. For example, if the network 300 is the Internet and the AP 210 is compatible with the IEEE802.11a standard, then the network connection unit 120 is a WLAN communication module compatible with IEEE802.11a standard and the electronic device 100 may establish a connection link with the AP 210 in the wireless network and perform a wireless communication through the corresponding wireless module, and then connect to the Internet at its back-end via the AP 210. The storage unit 130 stores a preferred AP list 132, which records multiple APs that the user has been connected and connection records corresponding thereto. Please refer to Fig. 3. Fig. 3 is a schematic diagram illustrating an embodiment of a preferred AP list of the invention. As shown in Fig. 3, the preferred AP list 132 includes multiple APs and each AP includes at least one priority data 310, one AP-related data 320, and corresponding connection record 330, wherein the priority data 310 indicates the connection priority of that AP, the AP-related data 320 indicates the relevant connection data of that AP, such as the AP name and its MAC address and so on, and the connection record 330 records the connection situation corresponding to the AP, such as the number of successful connections to the AP, but it is not limited thereto. For example, referring to Fig. 3, the preferred AP list 132 comprises at least three APs, wherein for the AP with an AP name of "Home", its MAC address is set to be "XX", the number of successful connections is set to be 20, and its priority is 1, indicating that the AP "Home" will be given priority for connection. To be more specific, in the preferred AP list 132, the lower the value in its priority is, the higher its priority will be, and therefore, the AP with the lowest priority will be first selected to connect. When the users need to connect to the network 300, the APs in the preferred AP list 132 to connect can be sequentially selected based on the values of priority of the APs in ascending order.

The display unit 140 may display the relevant message on the connection status, such as connection success or connection failure message to the user to distinguish the current status of the network connection. The display unit 140 may further provide a user interface, through which the user can manually configure content related to the preferred AP list. For example, to customize the connection priority in the preferred AP list or to add, modify, or delete data of a certain AP. The processing unit 110 which is coupled to the network connection unit 120, the storage unit 130 and the display unit 140 can perform the management method of the present invention, wherein the processing unit 110 may select one of the APs from the preferred AP list 132 and connect to the selected AP through network connection unit 120 to connect to the network 300 when the network 300 is to be connected. The responsive management method will be discussed further in the following paragraphs.

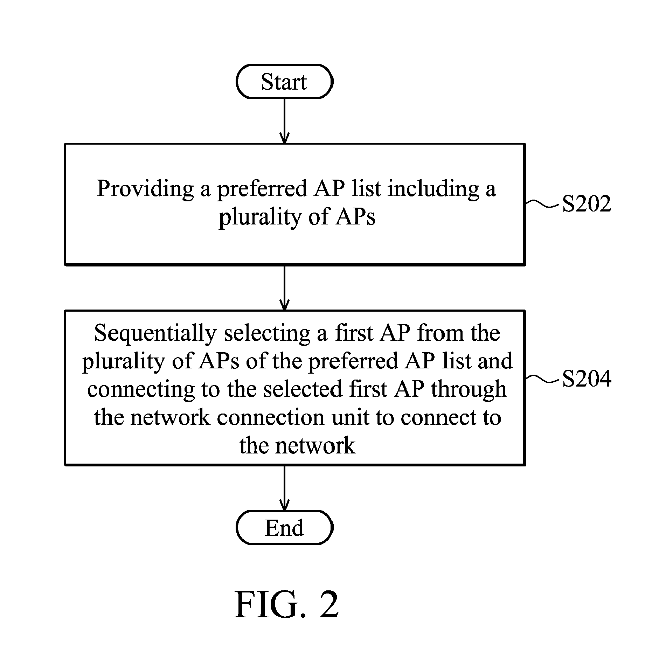

Fig. 2 is a flowchart of an embodiment of a management method of the invention. Please refer to Figs. 1 and 2. The management method can be applied to the electronic device 100 for automatically managing whether to connect to responsive APs.

First, in step S202, a preferred AP list is provided, wherein the preferred AP list records a plurality of APs and connection records corresponding thereto. For example, the processing unit 110 may obtain the preferred AP list 132 shown in Fig. 3 from the storage unit 130, wherein the preferred AP list 132 may include priority data 310 of each AP that has been previously connected, AP-related data 320, and corresponding connection record 330, which contains the number of successful connections.

Thereafter, when the network 300 is to be connected, in step S204, the processing unit 110 sequentially selects a first AP from the APs listed in the preferred AP list 132 and connects to the selected first AP through the network connection unit 120 to connect to the network 300. The processing unit 110 may select the first AP in order based on the connection records corresponding to the APs listed in the preferred AP list 132. When the selected first AP is successfully connected, the processing unit 110 will stop connecting to other APs. Contrarily, when the selected first AP is not successfully connected, the processing unit 110 continues to select a next AP from the preferred AP list 132 for connection. The responsive connection record of each AP includes a number of successful connections, and the processing unit 110 first selects from the preferred AP list 132 the AP with a higher number of successful connections as the first AP. For example, as shown in Fig. 3, as the number of successful connections to the APs in the preferred AP list 132 is arranged in descending order of AP by AP names "Home" (20 times), "Office" (10 times), and "Coffee" (5 times), the processing unit 110 may sequentially select the APs by a sequence of the AP names "Home" (first choice) first, then "Office" (second choice), and "Coffee" (third choice) for connection. In other words, the processing unit 110 may automatically find the AP with the highest number of successful connections in the preferred AP list 132 and give it priority to connect, which is more meet to the user's actual habit of use.

In some embodiments, when the electronic device 100 detects and connects to a second AP, the processing unit 110 may first determine whether the second AP is one of the APs in the preferred AP list 132 to determine whether or not to perform the management method of the invention to adjust and update the preferred AP list 132 in accordance with the connection status.

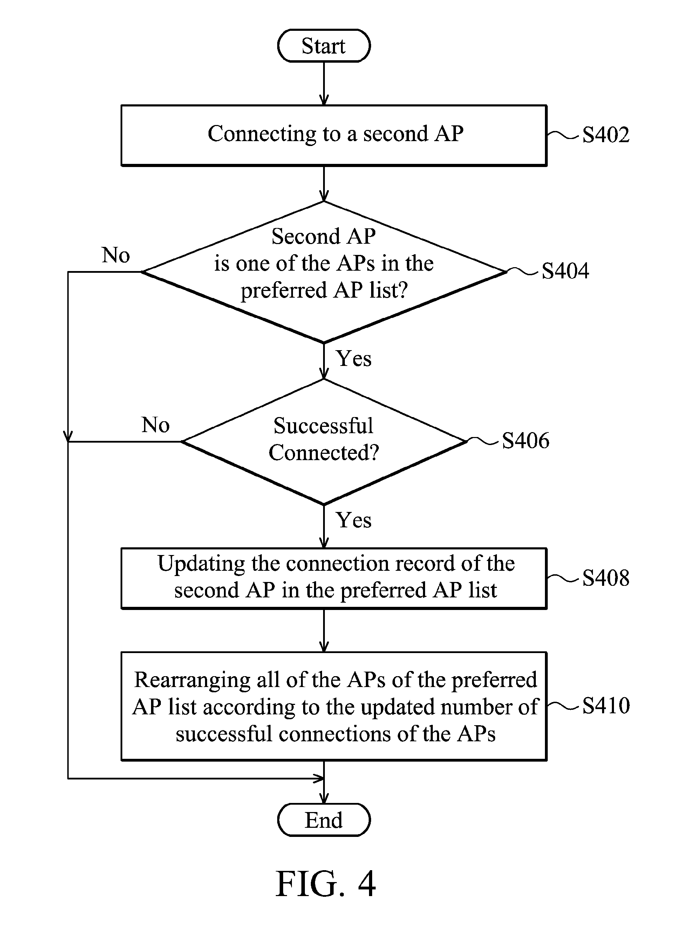

Fig. 4 is a flowchart of another embodiment of a management method of the invention. Please refer to Figs. 1 and 4. The management method can be applied to the electronic device 100.

First, in step S402, the processing unit 110 detects that the electronic device 100 has connected to a second AP through the network connection unit 120 and thus, in step S404, determines whether the second AP is one of the APs in the preferred AP list 132 or not. If the second AP is none of the APs in the preferred AP list 132 (No in step S404), the procedure ends and the preferred AP list 132 remains unchanged. If the second AP is one of the APs in the preferred AP list 132 (Yes in step S404), steps S406 to S410 are further performed to determine whether to update the preferred AP list 132 based on the connection status that the network connection unit 120 connects to the second AP. In step S406, the processing unit 110 determines whether the second AP is successfully connected. If the second AP is not successfully connected (No in step S406), the procedure ends and the preferred AP list 132 remains unchanged. If the second AP is successfully connected (Yes in step S406), the processing unit 110 determines that the preferred AP list 132 requires to be updated and thus performs step S408 to update the connection record of the second AP in the preferred AP list 132. To be more specific, the record of connection success corresponding to the second AP in the preferred AP list 132 will be accumulated based on the number of actual successful connections. After update of the number of successful connections corresponding to the second AP, the priority of the existing AP in the preferred AP list 132 may be changed. Therefore, in step S410, the processing unit 110 may rearrange the APs in the preferred AP list 132 based on their updated number of successful connections.

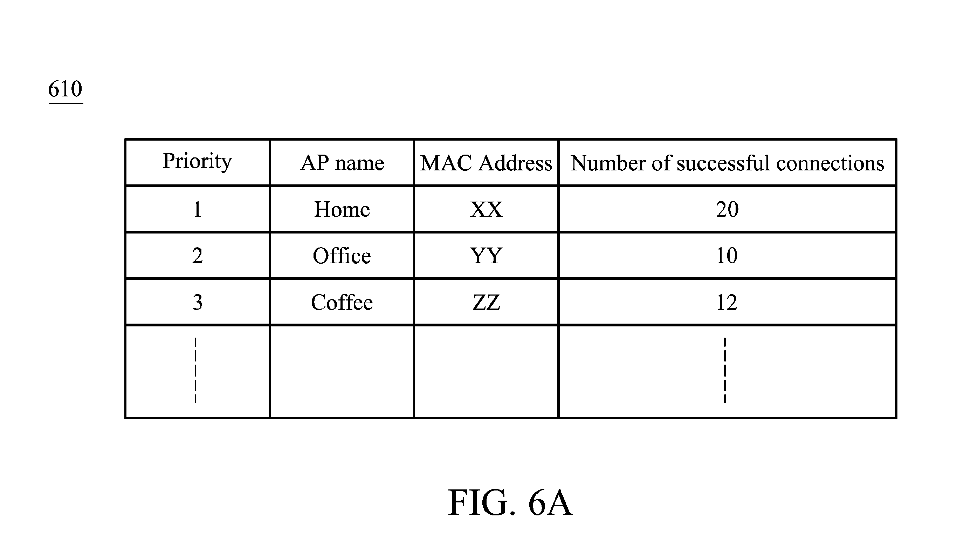

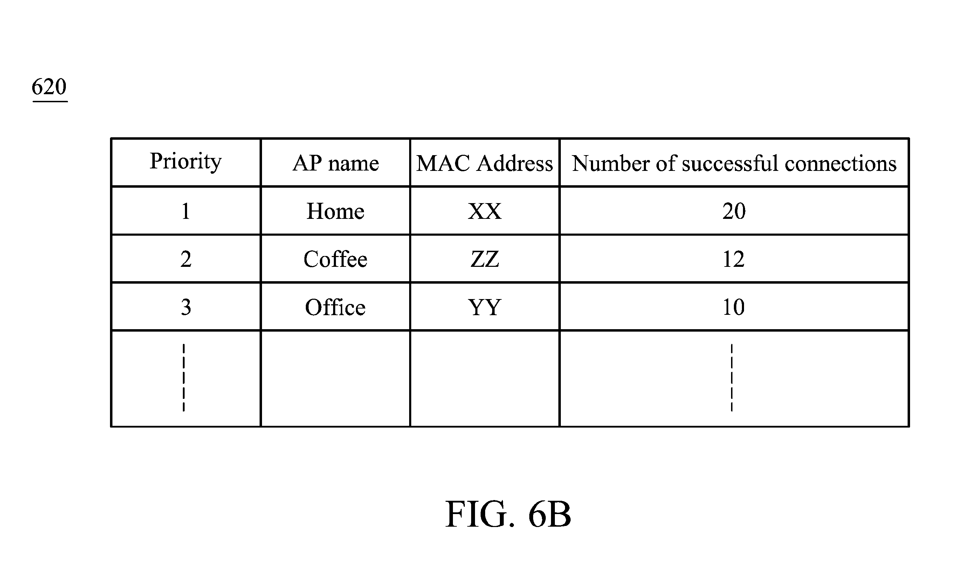

For example, referring to Fig. 3, Fig. 6A and Fig. 6B. Figs. 6A and 6B are schematic diagrams illustrating embodiments of variations of the preferred AP list 132 shown in Fig. 3. It is assumed that the processing unit 110 first detects that the electronic device 100 is connected to an AP with an AP name of "New" through the network connection unit 120 and the preferred AP list 132 remains unchanged since this AP is none of the APs in the preferred AP list 132. When the processing unit 110 then detects that the electronic device 100 is connected to an AP with an AP name of "Coffee" of the preferred AP list 132 and determines that the connection to the AP is successfully established, the processing unit 110 updates the number of successful connections for the AP with the AP name of "Coffee" in the preferred AP list 132. The preferred AP list 132 is thus updated to the preferred AP list 610, as shown in Fig. 6A. After updating of the number of successful connections for the AP with the AP name of "Coffee" in the preferred AP list 132, the number of successful connections for the AP with the AP name of "Coffee" (12 times) becomes higher than that for the AP with the AP name of "Office" (10 times) so that the processing unit 110 may rearrange the APs in the preferred AP list 132 based on the updated number of successful connections for the APs. Therefore, the APs are rearranged in descending order of the number of successful connections for each AP by AP names "Home" (20 times), "Coffee" (12 times), and "Office" (10 times) and the preferred AP list 132 is adjusted to the preferred AP list 620, as shown in Fig. 6B. Therefore, the processing unit 110 may sequentially select the APs from the AP names "Home" (first choice), "Coffee" (second choice), and "Office" (third choice) for connection at next connection.

In addition, in some embodiments, when the electronic device 100 detects and connects to a new third AP and determines that the third AP is none of the APs in the preferred AP list 132, the processing unit 110 may further determine whether to allow adding the third AP in the preferred AP list 132.

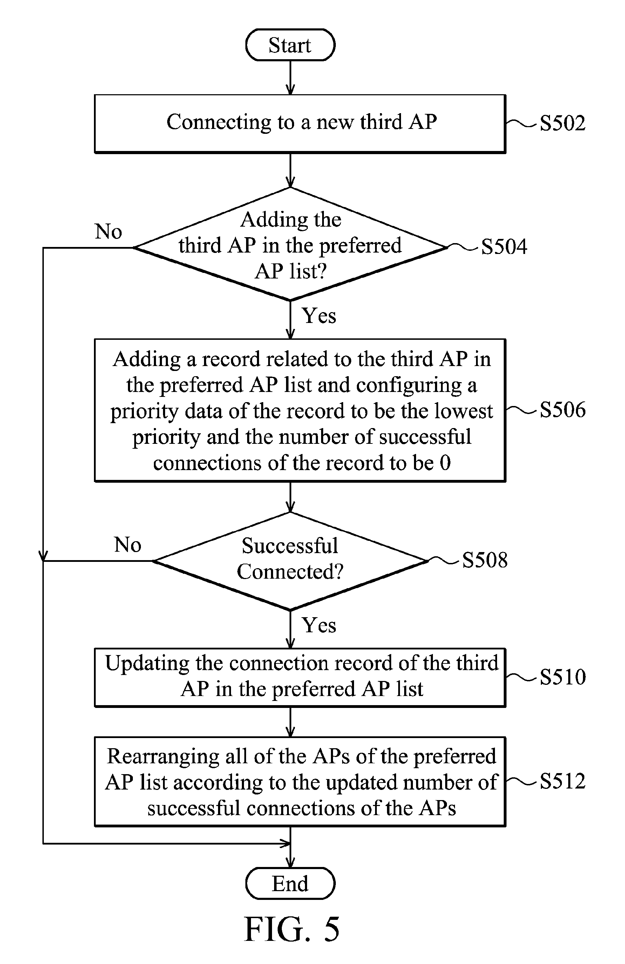

Fig. 5 is a flowchart of another embodiment of a management method of the invention. Please refer to Figs. 1 and 5. The management method can be applied to the electronic device 100.

First, in step S502, the processing unit 110 detects that the electronic device 100 has connected to a new third AP through the network connection unit 120 and thus, in step S504, determines whether to allow adding the third AP in the preferred AP list 132 or not. If no new AP is allowed to be added in the preferred AP list 132 (No in step S504), the procedure ends and the preferred AP list 132 remains unchanged. Contrarily, if the third AP is allowed to be added in the preferred AP list 132 (Yes in step S504), steps S506 to S512 are further performed to add a record of the new third AP in the preferred AP list 132 and determine whether to update the preferred AP list 132 based on the connection status that the network connection unit 120 connects to the third AP.

In step S506, the processing unit 110 may add a record related to the third AP in the preferred AP list 132 and configures a priority data 310 of the record related to the third AP to be the lowest priority and a number of successful connections data for the record is set to be 0. Thereafter, in step S508, the processing unit 110 determines whether the third AP is successfully connected. If the third AP is not successfully connected (No in step S508), the procedure ends and the preferred AP list 132 remains unchanged. If the third AP is successfully connected (Yes in step S508), the processing unit 110 determines that the preferred AP list 132 requires to be updated and thus performs step S510 to update the connection record of the third AP in the preferred AP list 132. Similarly, the record of connection success corresponding to the third AP in the preferred AP list 132 will be accumulated based on the number of actual successful connections. After update of the number of successful connections corresponding to the third AP, the priority of the existing AP in the preferred AP list 132 may be changed. Therefore, in step S512, the processing unit 110 may rearrange the APs in the preferred AP list 132 based on their updated number of successful connections.

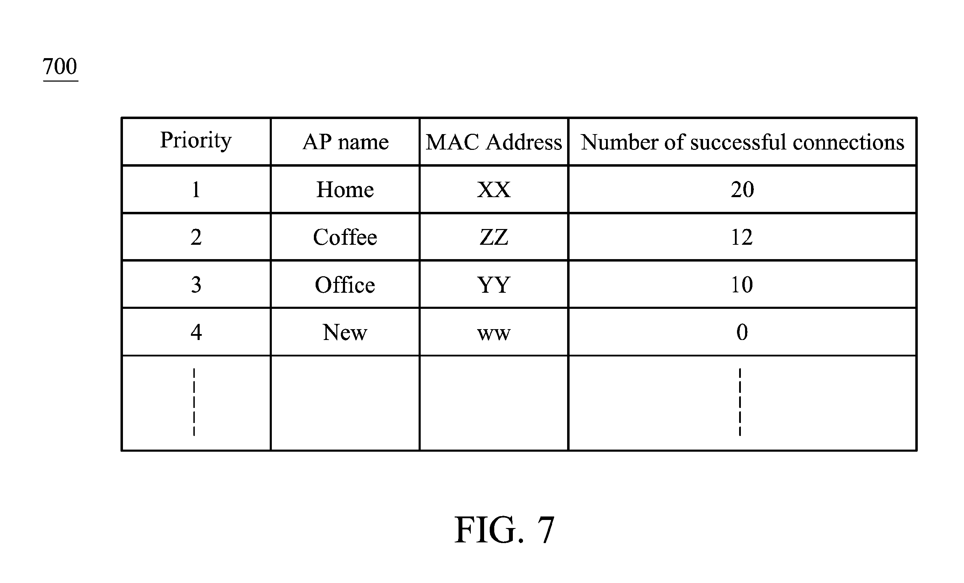

For example, referring to Fig. 6B and Fig. 7, Fig. 7 is a schematic diagram illustrating an embodiment of a preferred AP list after a new AP is added in the preferred AP list 620 shown in Fig. 6B. In this embodiment, it is assumed that the processing unit 110 first detects that the electronic device 100 is connected to an AP with an AP name of "New" through the network connection unit 120. Because this AP is a new AP and the processing unit 110 does not allow adding any new AP in the preferred AP list 132, the preferred AP list 132 remains unchanged. Contrarily, if the processing unit 110 allows the new AP to be added in the preferred AP list 132, the processing unit 110 adds a record related to the AP with an AP name of "New" in the preferred AP list 132 and configures a priority data of the record related to this AP to be the lowest priority and a number of successful connections data for the record is set to be 0. The preferred AP list 132 is adjusted to the preferred AP list 700, as shown in Fig. 7.

Similarly, when the processing unit 110 then detects that the electronic device 100 is connected to an AP with an AP name of "New" of the preferred AP list 700 and determines that the connection to the AP is successfully established, the processing unit 110 updates the number of successful connections for the AP with the AP name of "New" in the preferred AP list 700 and rearranges the APs in the preferred AP list 700 based on the updated number of successful connections for the APs.

It is understood that, although the aforementioned management method can automatically manage the preferred AP list, however, in some embodiments, the users may modify the preferred AP list manually to meet their requirement.

In some embodiments, the users may configure contents related to the preferred AP list manually based on their preferences and habits of use through a user interface provided on the display unit 140, such as manually defining the connection priority of each AP in the preferred AP list or adding, modifying or deleting data of a specific AP.

In sum, with the number of successful connections and other data of the AP that the user may have connected to as recorded in the preferred AP list, the electronic systems and related management methods of the invention can automatically and quickly connect to the user's most commonly used AP, thus saving time and making the connection process easier. Moreover, according to the preferred AP list management mechanism of the invention, the user's often used AP can be ensured to be given priority to connect, thus more meeting with the actual needs of the user.

Management methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A management method for use in an electronic device, wherein the electronic device includes a network connection unit for connecting to a network through a first access point (AP), the method comprising:
providing a preferred AP list (S202), wherein the preferred AP list records a plurality of APs and connection records corresponding thereto; and
sequentially selecting (S204) the first AP from the plurality of APs of the preferred AP list and connecting to the selected first AP through the network connection unit to connect to the network,
wherein each of the plurality of APs is sequentially selected as the first AP based on the corresponding connection record of the selected AP.

2. The management method of claim 1, wherein the connection record corresponding to each of the plurality of APs comprises a number of successful connections, and the step of sequentially selecting the first AP from the plurality of APs of the preferred AP list is performed by first selecting the plurality of APs with a highest number of successful connections to be the first AP.

3. The management method of claim 1 or 2, further comprising:
selecting a second AP from the preferred AP list;
updating the number of successful connections corresponding to the second AP according to the connection status that the network connection unit connects to the second AP; and
rearranging all of the plurality of APs of the preferred AP list according to the updated number of successful connections for the second AP after the number of successful connections corresponding to the second AP has been updated.

4. The management method of any of the claims 1 to 3, further comprising:
connecting to a third AP;
determining whether the third AP is one of the plurality of APs of the preferred AP list;
when determining that the third AP is one of the plurality of APs of the preferred AP list, updating the number of successful connections corresponding to the third AP according to the connection status that the network connection unit connects to the third AP; and
when determining that the third AP is none of the plurality of APs of the preferred AP list, determining whether to allow to add the third AP in the preferred AP list.

5. The management method of claim 4, further comprising:
when determining to allow adding the third AP in the preferred AP list, adding a record related to the third AP in the preferred AP list and configuring a priority data of the record related to the third AP to be the lowest priority and setting the number of successful connections for the record to be 0;
updating the number of successful connections corresponding to the third AP according to the connection status that the network connection unit connects to the third AP; and
rearranging all of the plurality of APs of the preferred AP list according to the updated number of successful connections for the third AP after the number of successful connections corresponding to the third AP has been updated.

6. The management method of any of the claims 1 to 5, further comprising:
configuring the priorities of the plurality of APs within the preferred AP list through a user interface.

7. An electronic device (100), comprising:
a network connection unit (120), for establishing a connection with a first access point (AP) to connect to a network through the first AP;
a storage unit (130), for storing a preferred AP list, wherein the preferred AP list records a plurality of APs and connection records corresponding thereto; and
a processing unit (110), coupled to the network connection unit and the storage unit, sequentially selecting the first AP from the plurality of APs of the preferred AP list and connecting to the selected first AP through the network connection unit to connect to the network,
wherein the processing unit sequentially selects the first AP from the plurality of APs of the preferred AP list based on the corresponding connection record of the selected AP.

8. The electronic device of claim 7, wherein the connection record corresponding to each of the plurality of APs comprises a number of successful connections and the processing unit sequentially selects the first AP from the plurality of APs of the preferred AP list by first selecting the plurality of APs with a highest number of successful connections to be the first AP.

9. The electronic device of claim 7 or 8, wherein when selecting a second AP from the preferred AP list, the processing unit further updates the number of successful connections corresponding to the second AP according to the connection status that the network connection unit connects to the second AP and rearranges all of the plurality of APs of the preferred AP list according to the updated number of successful connections for the second AP after the number of successful connections corresponding to the second AP has been updated.

10. The electronic device of any of the claims 7 to 9, wherein when connecting to a third AP, the processing unit further determines whether the third AP is one of the plurality of APs of the preferred AP list and updates the number of successful connections corresponding to the third AP according to the connection status that the network connection unit connects to the third AP when determining that the third AP is one of the plurality of APs of the preferred AP list, wherein the processing unit further determines whether to allow adding the third AP in the preferred AP list when determining that the third AP is none of the plurality of APs of the preferred AP list.

11. The electronic device of claim 10, wherein the processing unit further adds a record related to the third AP in the preferred AP list and configures a priority data of the record related to the third AP to be the lowest priority and sets the number of successful connections for the record to be 0 when determining to allow to add the third AP in the preferred AP list; wherein the processing unit further updates the number of successful connections corresponding to the third AP according to the connection status that the network connection unit connects to the third AP and rearranges all of the plurality of APs of the preferred AP list according to the updated number of successful connections for the third AP after the number of successful connections corresponding to the third AP has been updated.

12. The electronic device of any of the claims 7 to 11, further comprising:
a display unit, for providing a user interface, wherein the processing unit further configures the priorities of the plurality of APs within the preferred AP list through the user interface.
